# EUROPEAN PATENT SPECIFICATION

(11) **EP 2 457 811 B1**
(45) Date of publication and mention of the grant of the patent: **02.10.2013**
(21) Application number: 10192541.0
(22) Date of filing: 25.11.2010
(51) Int. Cl.: B62J 1/06, B62K 19/36

(54) **Control device for height adjustable bicycle seat**
Steuervorrichtung für einen höhenverstellbaren Fahrradsitz
Dispositif de contrôle pour siège de bicyclette ajustable en hauteur

(43) Date of publication of application: 30.05.2012
(73) Proprietor: Hsu, Jung-Yu, Tainan City 709 (TW)
(72) Inventor: Hsu, Jung-Yu, Tainan City 709 (TW)
(74) Representative: Dufay, Nicolas Henri

(56) References cited:
- WO-A1-2004/023937
- WO-A1-2006/004379
- WO-A1-2008/083843
- DE-U1-202007 012 184
- JP-A- 7 172 364
- JP-A- 2003 081 150
- KR-B1- 100 939 140
- KR-B1- 100 968 038
- TW-Y- 278 624
- US-A- 3 861 740
- US-A1- 2009 324 327

## Description

### FIELD OF THE INVENTION

The present invention relates to a control device, and more particularly, to a control device using hydraulic and/or pneumatic means to control the hydraulic paths of the control device to adjust the height of the bicycle seat.

### BACKGROUND OF THE INVENTION

The proper height of the bicycle seat for the cyclist is crucial for protecting the cyclist from being injured during operation the bicycle and also for obtaining maximum efficiency of the operation of the bicycle. The adjustable bicycle seat is a trend for most of the bicycles when considering the cost of custom-made bicycle frames.

The existed bicycle seat adjustable devices use an adjustable mechanism located between the seat post and the seat tube so as to control the linear movement between the seat post and the seat tube. The conventional seat adjustable devices generally include mechanical adjustable devices, hydraulic/pneumatic adjustable devices, and hybrid adjustable devices which uses air and hydraulic media to adjust the seat. The mechanical adjustable devices use mechanical parts to set the relative height between the seat and the seat tube. The hydraulic/pneumatic adjustable devices use hydraulic media such as oil or air to achieve the purposes of adjustment of the seat. The hybrid adjustable devices utilize both of the air and hydraulic oil to adjust the height of the seat relative to the seat tube.

Each of the mechanical adjustable devices, hydraulic/pneumatic adjustable devices, and hybrid adjustable devices has a control unit so as to activate the adjustable device to allow the seat to be movable relative to the seat tube, when the seat is adjusted to a desired height, the control unit is locked to set the height of the seat. The control unit can be connected to the seat tube or the seat post directly so as to control the adjustable device. Alternatively, the control unit can be connected to any position of the bicycle frame other than the seat post and the seat tube.

One of the seat adjustable devices is disclosed in US Patent No. 7,083,180 and comprises a control unit located in the seat tube and the user can pivot a lever to push the rod in the adjustable device to seal or open the oil paths in the seat post and the seat tube so as to adjust the position of the seat.

Another adjustable device is disclosed in Taiwan Utility Patent Application No. 097223637 and comprises an inner tube which has an axial adjustment slot with two inclined insides, multiple holes are located at the bottom of the slot. An outer tube is mounted to the inner tube which is movable linearly relative to the outer tube. A cap seals the bottom of the outer tube and has a position rod extending into the outer tube. A spring is located in the outer tube and has one end extending through the positioning rod and the other end of the spring contacts the inner tube. An action unit extends through the outer tube and the slot, and includes a positioning member which is engaged with one of the holes. The positioning member has inclined surfaces which are matched with the inclined insides of the slot so that the positioning member is movable in the radial direction to control the relative position between the inner and outer tubes.

Yet another adjustable device is disclosed in Taiwan Utility Patent Application No. 094204651 and comprises a rise device and a control device, wherein the rise device has a spring and a locking member located in the recess of the seat tube. The locking member has a block and a passage, multiple hard sleeves, soft sleeves, washers and a base connected to the seat post. The base has protrusions on the periphery thereof to form a connection space. A washer, a locking member and a rod are located in the connection space. The control device has a lever and a cable which is fixed to a board by the locking member. The connection space of the seat tube has a closed end and the cable extends through the seat post. A flange extends from a mediate portion of the seat post and multiple blocks are connected to the lower end of the seat post to form connection slots.

The first two prior adjustable devices provide the switch close to the seat tube or the seat post, wherein the switch of the first adjustable device is directly connected to the rod so as to control the linear movement of the seat post and is suitable cooperated with the hydraulic/pneumatic adjustable devices. The second adjustable device provides an engaging device located between the seat post and the seat tube and has multiple holes located axially such that the positioning member is engaged with one of the holes to seat the height. The third adjustable device provides the lever outside of the seat post and the seat tube, and the user can operate the lever. The rise device is connected with a cable which activates the action of adjustment.

However, the hydraulic/pneumatic adjustment devices are restricted by the position of the rod so that the rod has to be connected to the related hydraulic/pneumatic parts. The rod extends downward from the post tube to the valve unit so that the most of the parts are located on the top section of the seat tube and the action unit is located close to the clamp unit. If the rod extends upward from the seat tube and is connected to the valve unit, the action unit has to be located at the lower portion so as to be connected to the rod and control the movement of the rod.

US Patent No. 3,861,740 discloses a bicycle seat adjustable device as in the preamble of claim 1.

International patent applications WO 2004/023937 and WO 2006/004379 discloses a bicycle seat adjustable device which differs from the one disclosed in the preamble of claim 1 in that the valve unit controls a gas path and not a hydraulic path.

### SUMMARY OF THE INVENTION

The present invention relates to a bicycle seat adjustable device as defined in claim 1.

The inner tube is movable relative to the outer tube so as to set the height of the bicycle seat. The action unit is not restricted by the position of the rod and the switch can be installed to any position of the bicycle frame.

The primary object of the present invention is to provide a bicycle seat adjustable device which is used for the hydraulic/pneumatic adjustable device, wherein the rod of the valve unit extends upward in the seat tube. The action unit is located out side of the seat tube such that the action unit is not restricted by the position of the rod and the switch can be installed to any position of the bicycle frame.

The secondary object of the present invention is to provide a bicycle seat adjustable device wherein the action unit and the control unit are used for the hydraulic/pneumatic adjustable device, so that the action unit and the control unit can be used with mechanical adjustable device, hydraulic/pneumatic adjustable devices and electro-magnetic adjustable devices.

According to the invention, the control unit is an electric control valve unit and the control transmitting member is an electric wire, a distal end of the electric wire being connected to a switch so as to control the electric wire and indirectly cause the push member to move the rod linearly and control hydraulic path in the piston seat by the electric control valve unit.

The present invention will become more obvious from the following description when taken in connection with the accompanying drawings.

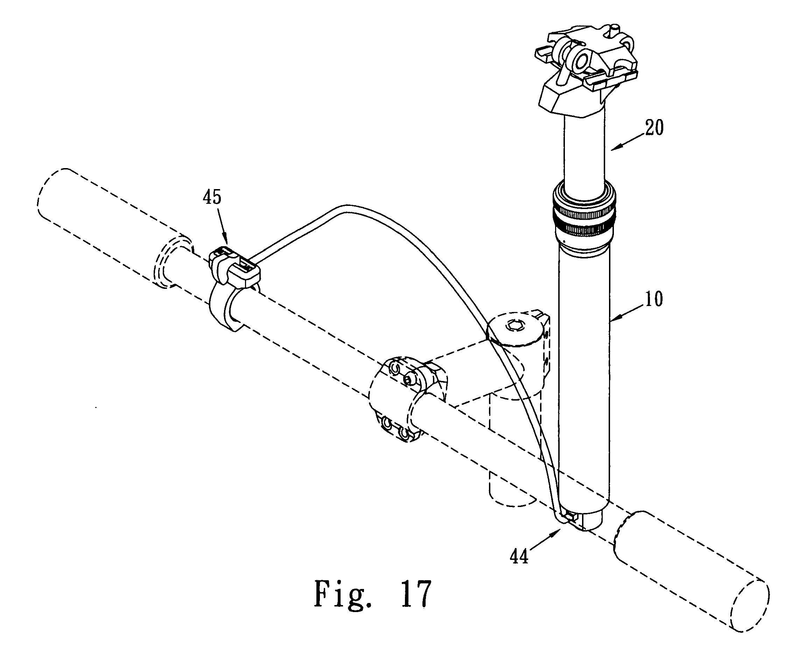

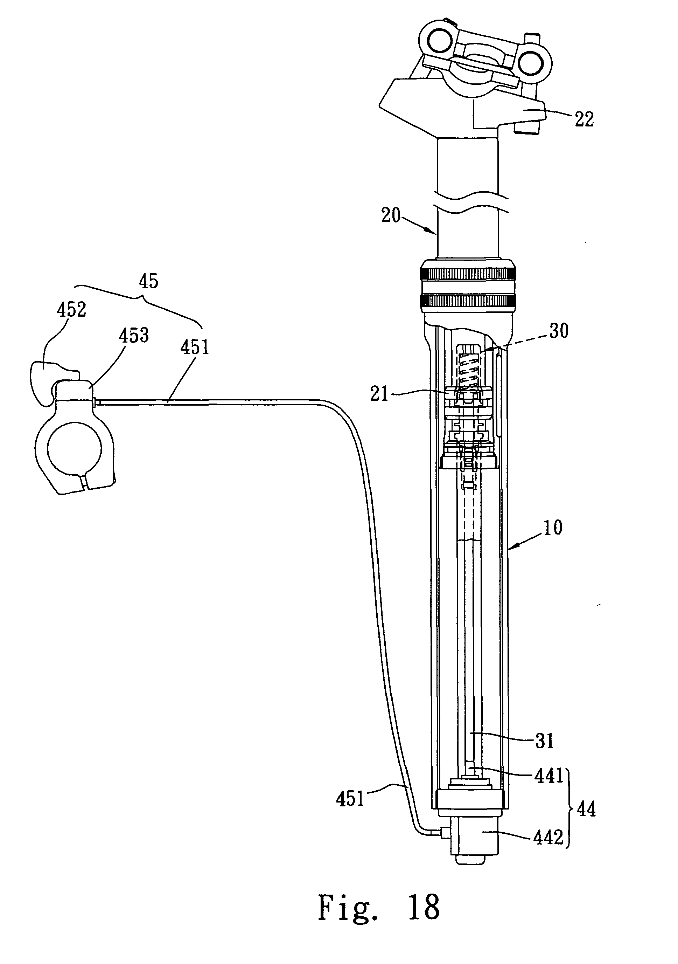

Only the sixth embodiment, represented in Figures 17 and 18, is claimed in the present invention.

### BRIEF DESCRIPTION OF THE DRAWINGS

Fig. 1 is a perspective view to show a first example of a bicycle seat adjustable device installed to a bicycle;
Fig. 2 is a perspective view to show the first example of a bicycle seat adjustable device;
Fig. 3 is another perspective view to show the first example of a bicycle seat adjustable device;
Fig. 4 is an exploded view to show the first example of a bicycle seat adjustable device;
Fig. 5 is an exploded view to show the control unit of the first example of a bicycle seat adjustable device;
Fig. 6 is a cross sectional view of the first example of a bicycle seat adjustable device;
Fig. 7 shows a side view to show the first example of a bicycle seat adjustable device installed to a bicycle;
Fig. 8 shows the action status of the first example of a bicycle seat adjustable device;
Fig. 9 is a cross sectional view of a second example of a bicycle seat adjustable device located in the seat tube of a bicycle;
Fig. 10 is a perspective view to show a third example of a bicycle seat adjustable device;
Fig. 11 is a cross sectional view of a third example of a bicycle seat adjustable device;
Fig. 12 is a cross sectional view of a fourth example of a bicycle seat adjustable device;
Fig. 13 is an enlarged cross sectional view of the control unit of the fourth example of the bicycle seat adjustable device;
Fig. 14 is an enlarged cross sectional view to show the action of the control unit of the fourth example of the bicycle seat adjustable device;
Fig. 15 is a perspective view to show a fifth example of a bicycle seat adjustable device, and
Fig. 16 is a cross sectional view of a fifth example of a bicycle seat adjustable device;
Fig. 17 is a perspective view to show a first embodiment of the bicycle seat adjustable device of the present invention, and
Fig. 18 is a cross sectional view of the first embodiment of the bicycle seat adjustable device of the present invention.

### DETAILED DESCRIPTION OF THE PREFERRED EMBODIMENT

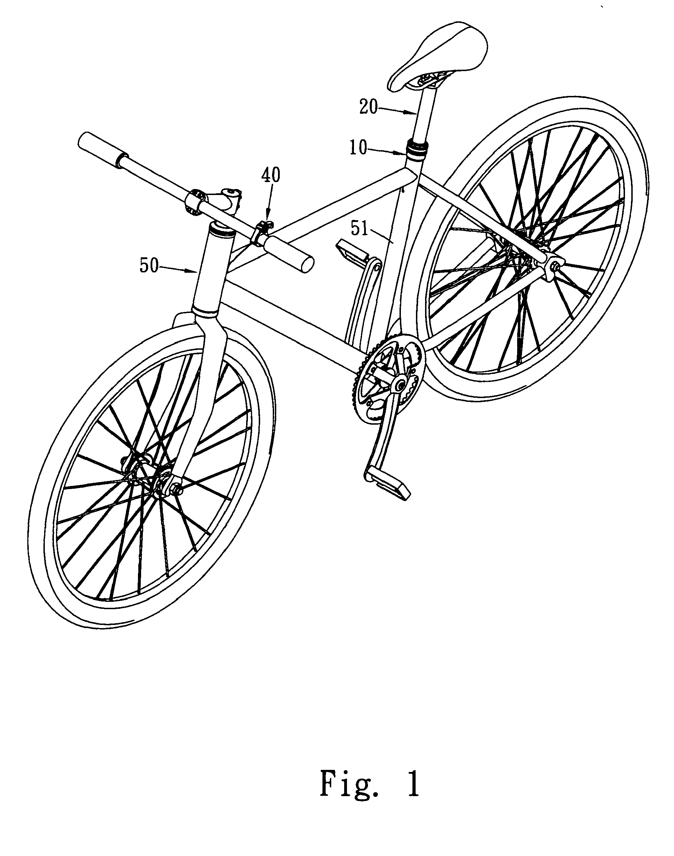

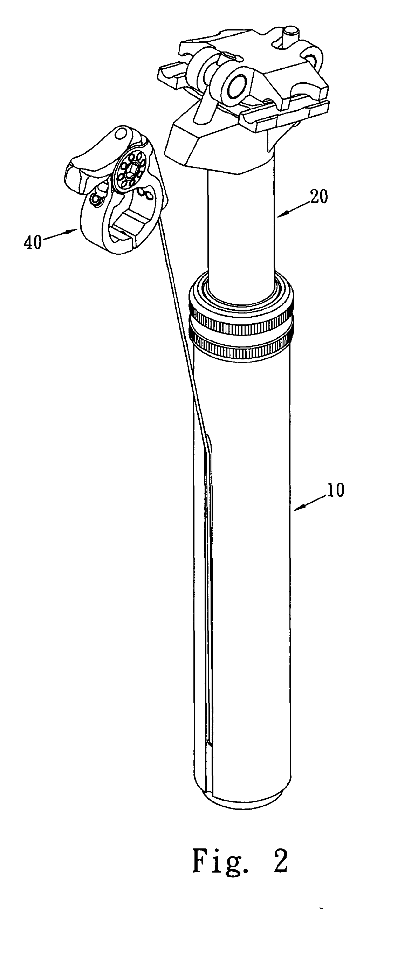

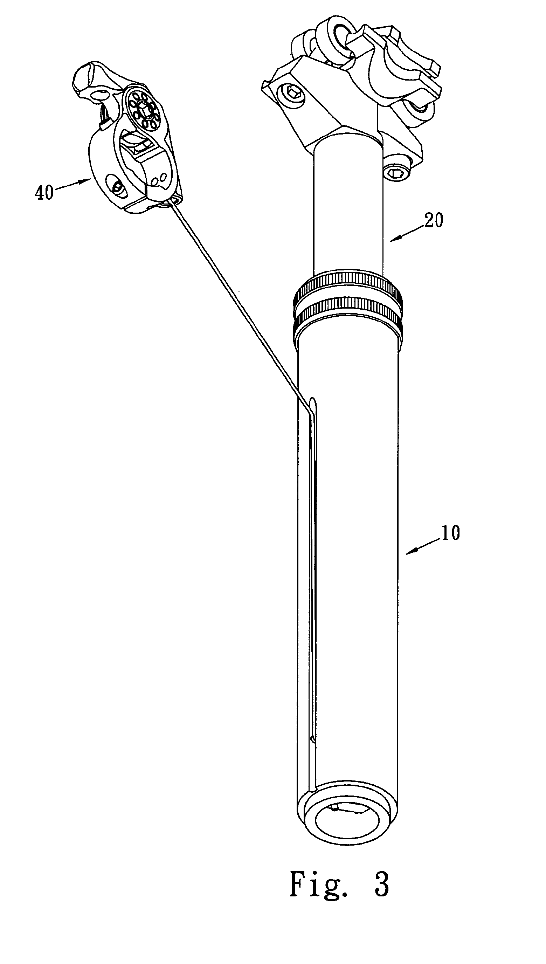

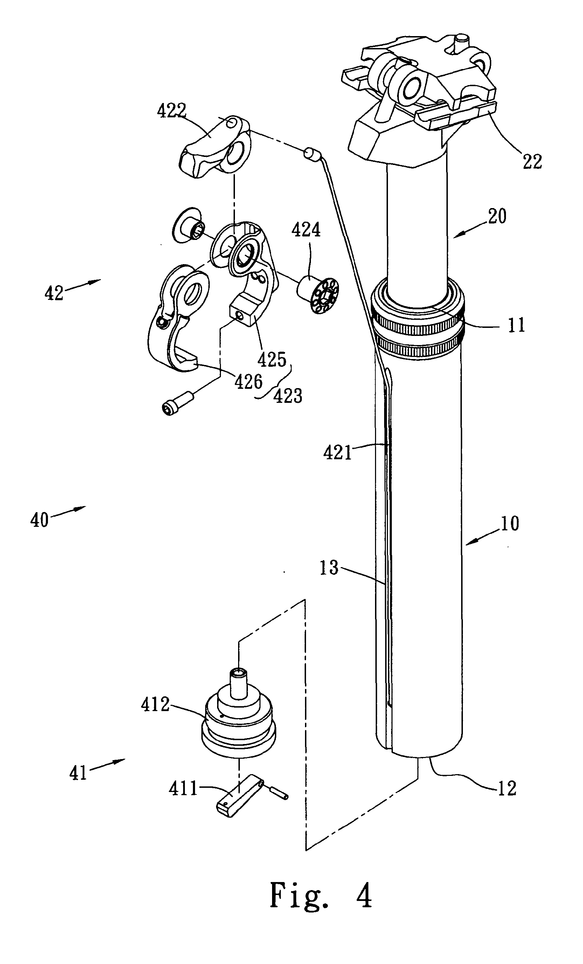

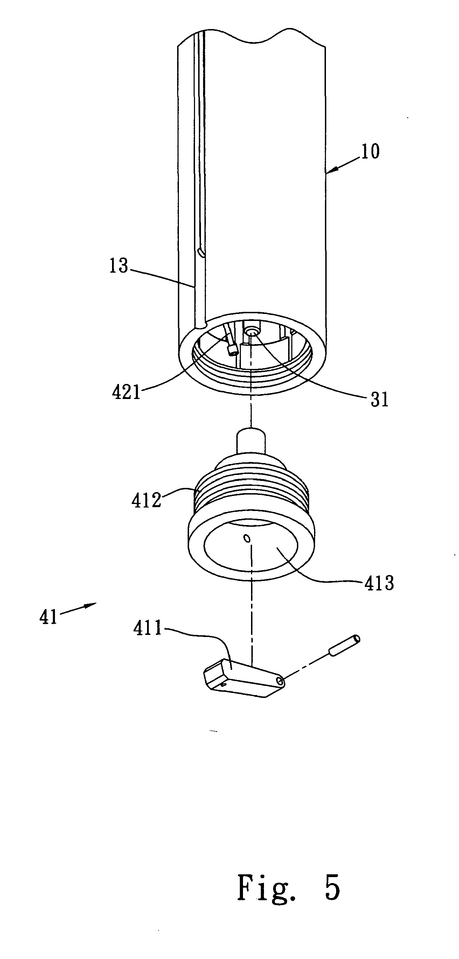

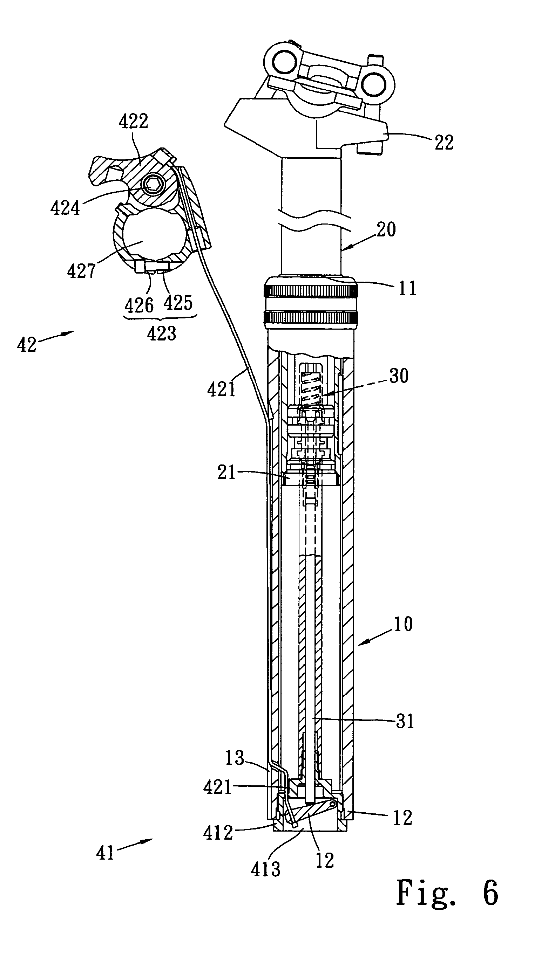

Referring to Figs. 1 to 6, the bicycle seat adjustable device according to a first example, which is not an embodiment of the present invention, is installed in the seat tube 51 of a bicycle frame 50 and comprises an outer tube 10 in which an inner tube 20 is located. A valve unit 30 is located in the inner tube 20 and height adjusting control unit 40 is connected to the handlebar 52 of the bicycle frame 50.

The outer tube 10 is a hollow tube and has a top end 11 and a bottom end 12 on two ends thereof. The outer tube has a slot 13 defined axially in outer surface thereof.

The inner tube 20 is a hollow tube which is inserted into the outer tube 10 via the top end 11 of the out tube 10. The inner tube 20 has a piston seat 21 and a clamp unit 22 are connected on two ends thereof.

The valve unit 30 extends through the piston seat 21 and located in the inner tube 20. The valve unit 30 comprises a rod 31 extending through the piston seat 21 and reaches the bottom end 12 so as to control hydraulic path in the piston seat 21.

The height adjusting control unit 40 has a control unit 41 connected to the bottom end 12 of the outer tube 10 and an action unit 42 which is located outside of the outer tube 10. The control unit 41 has a push member 411 connected with the rod 31 so as to move the rod 31 linearly. The action unit 42 has a cable 421 which extends through the outer tube 10 and is connected to the push member 411. A distal end of the cable 421 is connected to a switch 422. The push member 411 is indirectly moved so as to move the rod 31 to control the hydraulic path in the piston seat 21 by pulling the cable 421.

The action unit 42 has a securing init 423 which comprises a pin 424 and two parts 425, 426. The two parts 425, 426 form a clamping space 427 so as to be connected to the bicycle frame, such as the handlebar 52. The switch 422 is pivotably connected to the two parts 425, 426. The control unit 41 has a frame 412 fixed in the bottom end 12 and the frame 412 has a space 413. The rod 31 extends through the frame 412 and is inserted into the space 413. The push member 411 is an elongate rod and pivotably connected to the space 413 and pivotable in the space 413. The cable 421 extends through the outer tube 10 and the frame 412 and is located in the space 413 and connected to the push member 411.

By the action unit 42 located outside of the bicycle frame 50, the user pulls the cable 421 to indirectly move the push member 411 to move the rod 31 linearly and control the hydraulic path in the piston seat 21. Therefore, the inner tube 20 is movable relative to the outer tube 10. The action unit 42 is not restricted by the position of the rod 31 so that the action unit 42 can be installed to any position of the bicycle frame 50.

When in assembling, the piston seat 21 and the clamp unit 22 are connected to the two ends of the inner tube 20, and the piston seat 21 leads the inner tube 20 into the outer tube 10. The valve unit 30 extends into the piston seat 21 and one end of the rod 31 extends into the piston seat 21 and the other end of the rod 31 extends toward the bottom end 12. The push member 411 is pivotably connected to the space 413 of the frame 412, the frame 412 is fixed in the bottom end 12 and the rod 31 extends into the space 413. The two parts 415, 426 and the switch 422 are pivotably connected to each other by the pin 424 so as to form the clamping space 427. The cable 421 has one end extending into the space 413 and fixed to the push member 411. The other end of the cable 421 extends through the slot 13 of the outer tube 10.

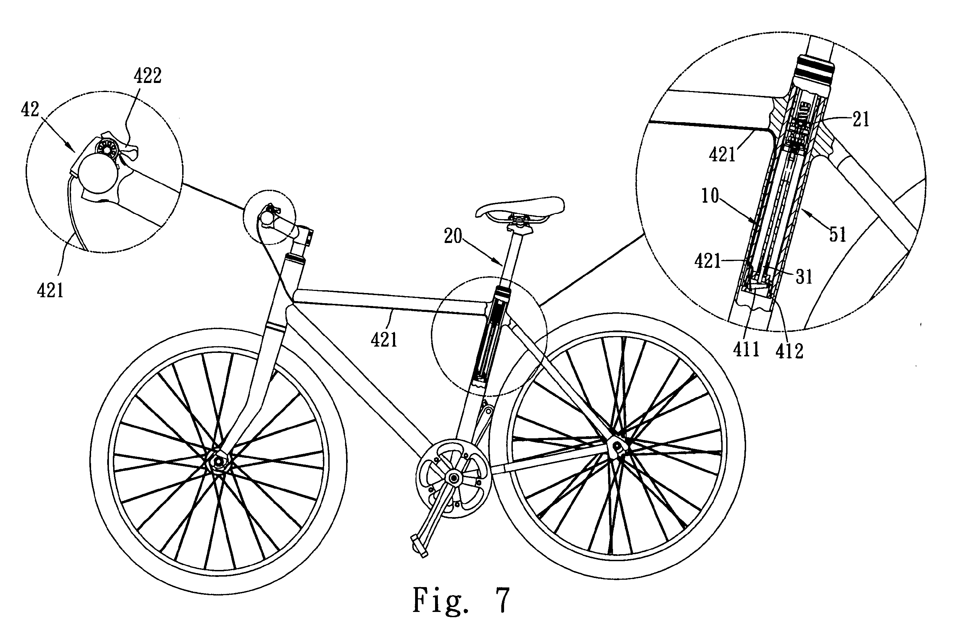

As shown in Fig. 7, the clamping space 427 is mounted to the handlebar 52 of the bicycle frame 52 and the outer tube 10, the inner tube 20, the valve unit 30 and the height adjusting control unit 40 are installed in the seat tube 51. The cable 421 extends through the seat tube 51 and is exposed from the bicycle frame 50. The cable 421 extends toward the action unit 42 and is wrapped to a desired position of the bicycle frame 50. Finally, the cable 421 extends through the part 425 and is connected to the switch 422.

It is noted that the action unit 42 can be installed to any position of the bicycle frame 50 such as the handlebar 52, the head tube, the top tube, the down tube and the seat tube 51.

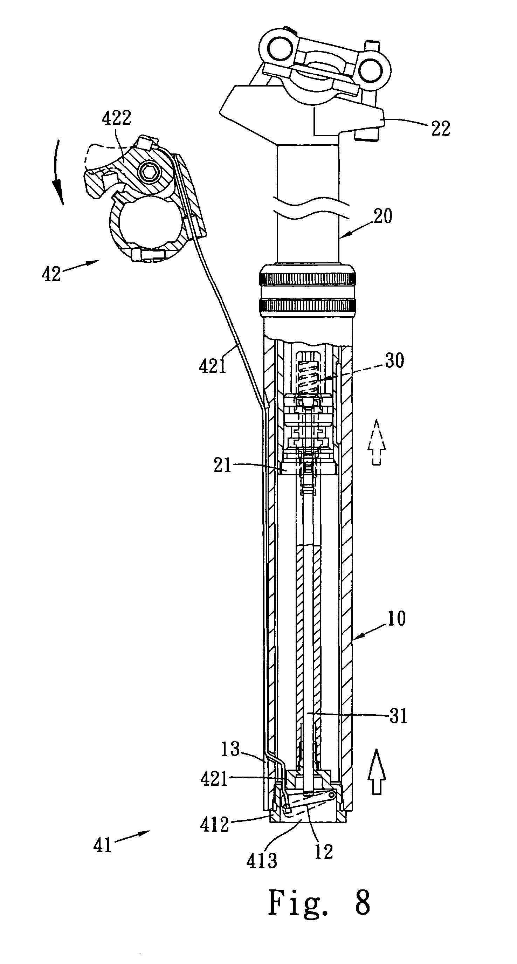

As shown in Fig. 8, when adjusting the bicycle seat, the user pivots the switch 422 to pull the cable 421 and the push member 411 is pivoted so that the rod 31 is moved toward the piston seat 21 to open the hydraulic path in the piston seat 21 such that the inner tube 20 is moved linearly relative to the outer tube 10. When the bicycle seat reaches the desired position, the switch 422 is released and the cable 421 is released, the rod 31 is pushed to its original position by the spring in the valve unit 30, and the hydraulic path in the piston seat 21 is closed. The rod 31 pushes the push member 411 back and the inner tube 20 is set relative to the outer tube 10.

The valve unit 30 makes the rod 31 the rod 31 to extend upward and toward the piston seat 21 from the bottom end 12, and this is different from the way of the rod of the conventional adjustable devices. Because the control portion of the valve unit 30 is located at the lower position so as to move the rod 31 up and down, so that the control unit 41 is installed to the bottom end 12 of the outer tube 10.

The height adjusting control unit 40 is separated from the valve unit 30 so that the control unit 41 is connected to the rod 31, and cooperated with the action unit 42 to co-operate with the cable 421. The action unit 42 is not restricted by the position of the rod 31 and the switch 422 can be installed to any position of the bicycle frame 50. The adjustable device includes less number of parts and can be easily and quickly assembled.

The slot 13 provides a space for the cable 421 to extend so that the cable 421 is not shift or disengaged, and the cable 421 is not exposed out form the outer periphery of the outer tube 10. When the outer tube 10 is located in the seat tube 51, there will be not necessary to have a gap between the inner periphery of the seat tube 51 and the outer periphery of the outer tube 10 for the cable 421. This also makes the assembly of the outer tube 10 and the seat tube 51 be easy because the cable 421 is not exposed.

The control unit 41 is installed in the bottom end 12 by the frame 412 with the space 413, the frame 412 seals the lower end of the outer tube 10 to form a room for the hydraulic oil or air, the space 413 also accepts the control unit 41.

The push member 411 is pivotably connected in the space 413 and one side of the push member 411 contacts an end of the rod 31 and the other end of the push member 411 is connected to the cable 421. The cable 421 can be operated by smaller force to move the rod 31.

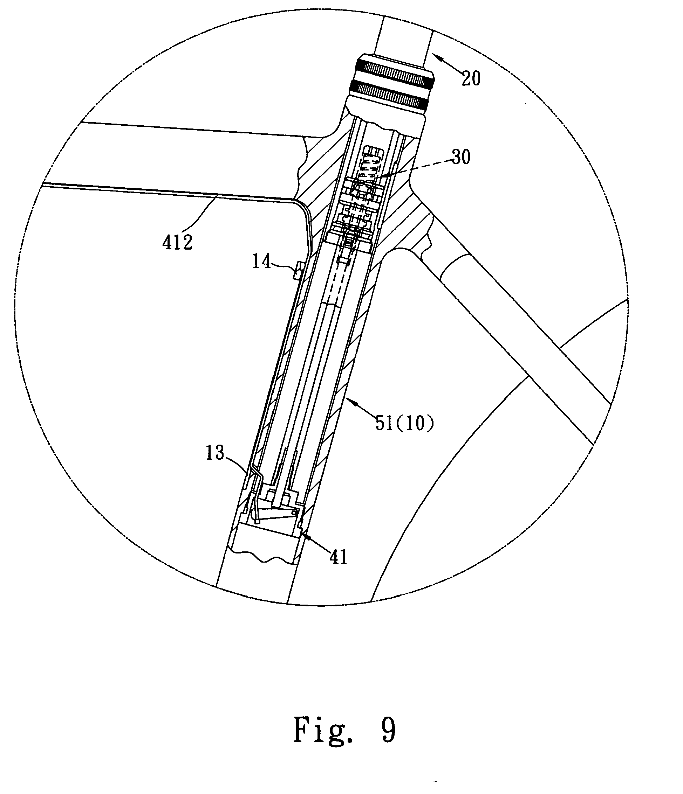

Fig. 9 shows a second example of a bicycle seat adjustable device, which is not an embodiment of the present invention, wherein the outer tube 10 is integrally formed with the seat tube 51 of the bicycle frame 50. The outer tube 10 has a positioning block 14 and the cable 421 extends through the positioning block 14 and is guided by the positioning block 14.

In this embodiment, the seat tube 51 replaces the outer tube 10 and the parts are installed in the seat tube 51, and this embodiment has the same functions as those of the first embodiment.

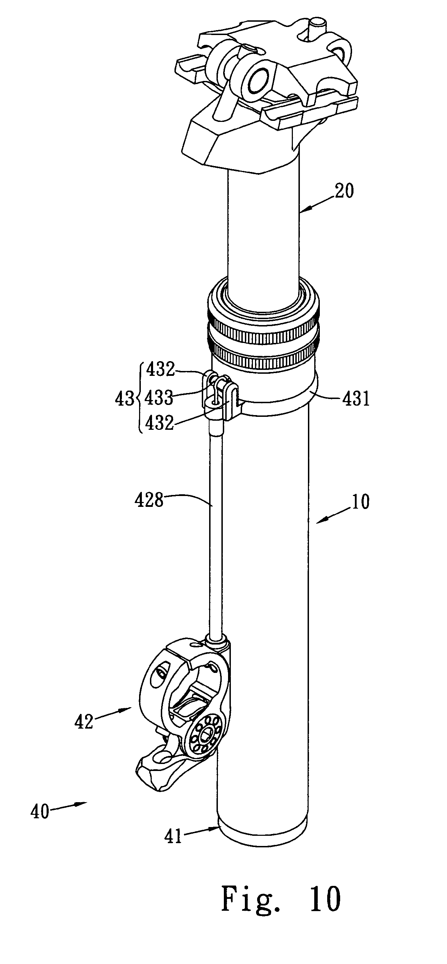

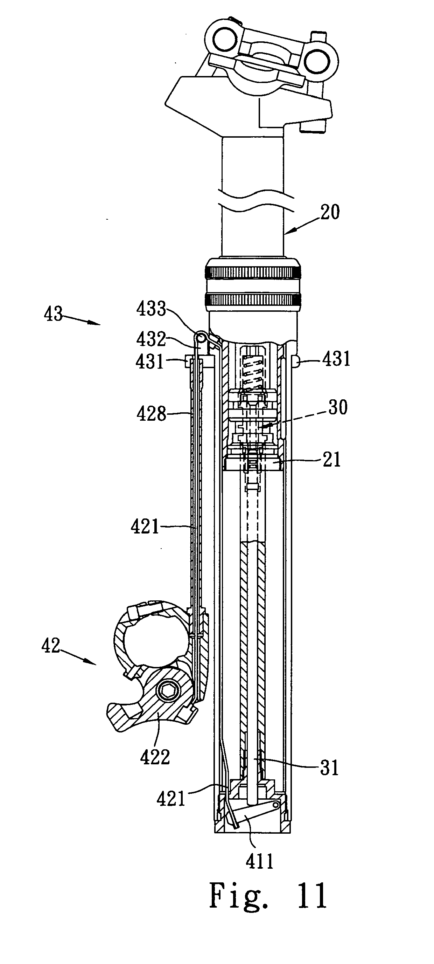

Referring to Figs. 10 and 11, a third example of a bicycle seat adjustable device, which is not an embodiment of the present invention is disclosed, wherein the height adjusting control unit 40 has a positioning unit 43 which is mounted to the outer tube 10 and has an annular portion 431. Two base parts 432 are connected to the annular portion 431 and separated from each other at a distance. A shaft 433 is located between the two base parts 432 and the cable 431 is wrapped to the shaft 433. A sleeve 428 is mounted to the cable 421 that is exposed outside of the outer tube 10.

In this embodiment, the positioning unit 43 is provided and is connected to a pre-set position of the outer tube 10 which does not need to have extra or different shape and structure. The positioning unit 43 guides the cable 421 to wrap correctly and prevents the cable 421 from being shifted.

Besides, the shaft 433 can be a fixed rod or a rod that is pivotable and can spin so as to drive the cable 421. The sleeve 428 protects the cable 421 from the water and dust.

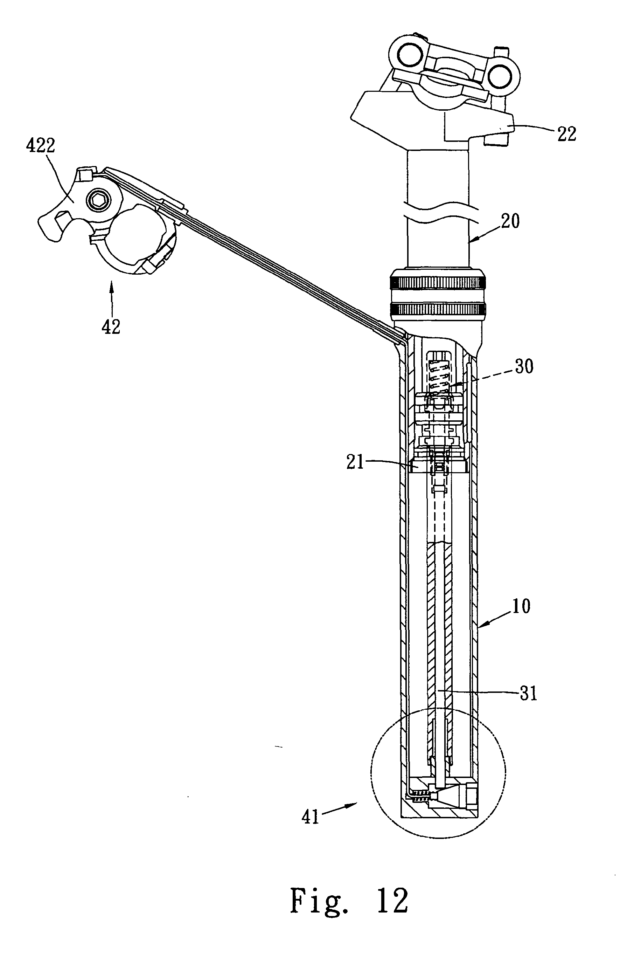

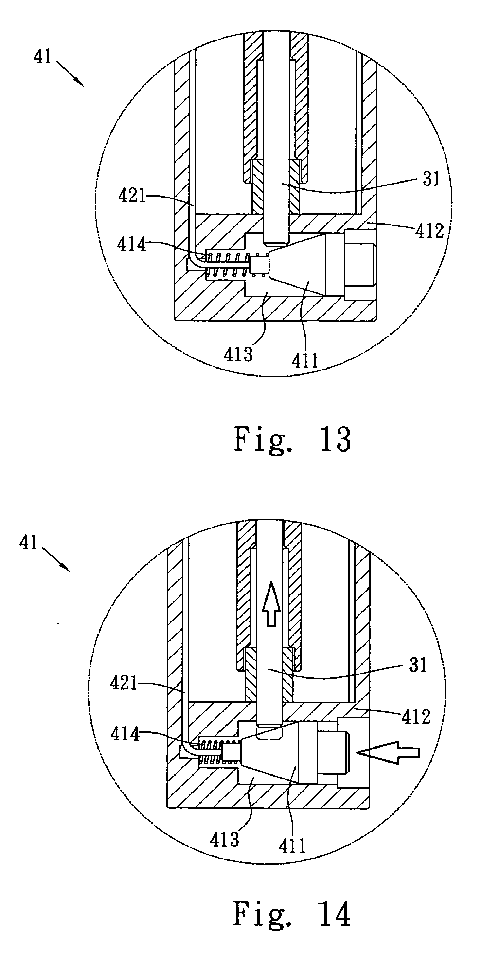

Figs. 12 to 14 show a fourth example of a bicycle seat adjustable device, which is not an embodiment of the present invention, wherein the control unit 41 has a frame 412 which is integrally formed with the bottom end 12 and the frame 412 has a space 413. The rod 31 extends through the frame 412 and is inserted into the space 413. The push member 411 is cone-shaped member and linearly movable in the space 413. The cable 421 extends through the outer tube 10 and the frame 412 and is located in the space 413 and connected to the push member 411. A spring 414 is located between an inside of the space 413 and the push member 411 so as to provide a force to the push member 411.

The embodiment provides alternative embodiment of the control unit 41 and uses the cone-shaped push member 411 to move the rod 31 toward the piston seat 21 when the push member 411 is linearly moved. When the cable 421 is released, the push member 411 is moved in opposite direction by the spring 414, the rod 31 is moved along the tapered surface of the push member 411 and rod 31 gradually moves toward the space 413.

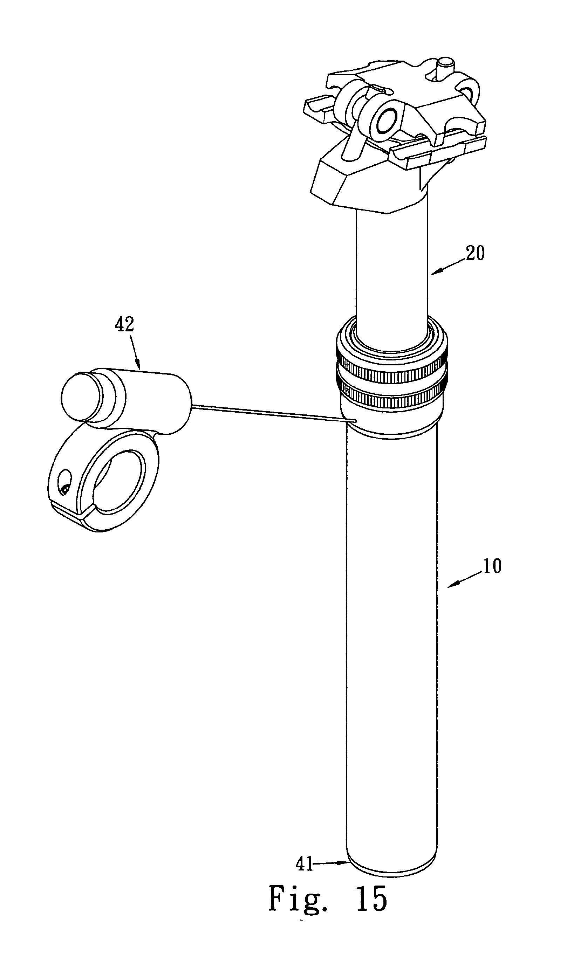

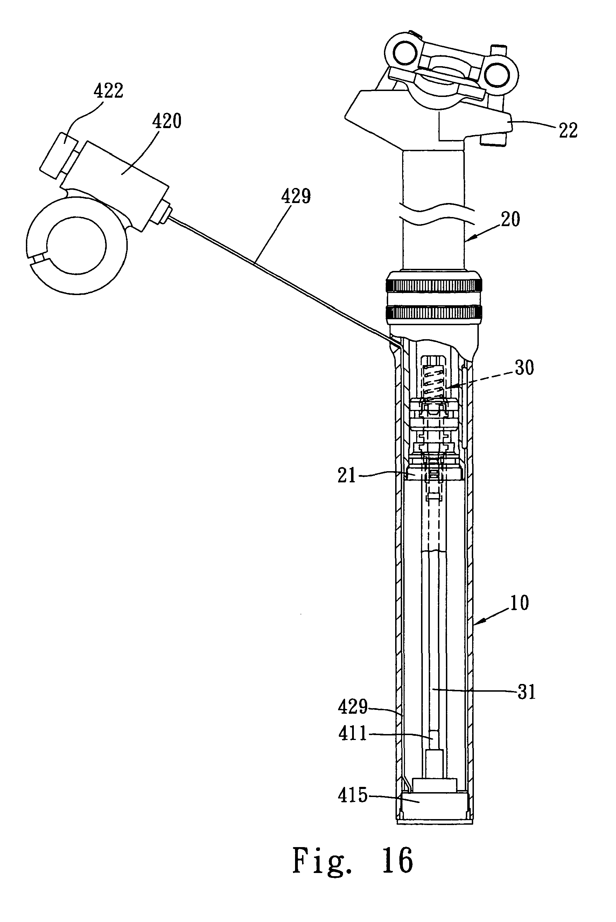

Figs. 15 and 16 show a fifth example of a bicycle seat adjustable device, which is not an embodiment of the present invention, wherein the height adjusting control unit 40 has a control unit 41 connected to the bottom end 12 of the outer tube 10 and an action unit 42 which is located outside of the outer tube 10. The control unit 41 has a push member 411 connected with the rod 31 so as to move the rod 31 linearly. The action unit 42 has an oil hose 429 which extends through the outer tube 10 and is connected to the push member 411. A distal end of the oil hose 429 is connected to a switch 422. The push member 411 is indirectly moved so as to move the rod 31 to control the hydraulic path in the piston seat 21 by controlling hydraulic liquid in the oil hose 429.

The control unit 41 has a control cylinder 415 fixed to the bottom end 12 and connected to the push member 411. The control cylinder 415 drives the push member 411 to move linearly by hydraulic force. The oil hose 429 extends through the outer tube 10 and is inserted into the bottom end 12 so as to be connected to the control cylinder 415 which is controlled by the action unit 42 to indirectly move the push member 411 linearly. The rod 31 is in contact with an end of the push member 411 which moves the rod 31. The action unit 42 has an action cylinder 420 located between the switch 422 and the oil hose 429 so as to control hydraulic oil in the oil hose 429 to flow to the control cylinder 415 to indirectly move the push member 411 and linearly move the rod 31.

The action unit 42 and the control unit 41 of the embodiment can be operated by hydraulic oil and perform the same functions as those in the previous embodiments. The action unit 42 and the control unit 41 of the embodiment can also be operated in pneumatic or mechanical adjustable devices.

Figs. 17 and 18 show a first embodiment of a bicycle seat adjustable device according to the present, wherein the height adjusting control unit 40 has an electric control valve unit 44 connected to the bottom end 12 of the outer tube 10 and an action unit 45 which is located outside of the outer tube 10. The electric control valve unit 44 has a push member 441 connected with the rod 31 so as to move the rod 31 linearly. The action unit 45 has an electric wire 451 which extends through the outer tube 10 and is connected to the push member 441. A distal end of the electric wire 451 is connected to a switch 452 so as to control the electric wire 451 and indirectly push the push member 441 to move the rod 31 linearly and control hydraulic path in the piston seat 21 by the electric control valve unit 44.

The electric control valve unit 44 has an electric control member 442 fixed in the bottom end 12 and connected to the push member 441. The electric control member 442 drives the push member 441 linearly by way of electro-magnetic force. The electric wire 451 extends through the outer tube 10 and is located in the bottom end 12 so as to be connected to the electric control member 442 which is controlled by the action unit 45 and indirectly drives the push member 441 linearly. The rod 31 is in contact with one end of the push member 441 and pushed by the push member 441. The action unit 45 has an action member 453 located between the switch 452 and the electric wire 451 so as to transfer the electro-magnetic force in the electric wire 451 to the electric control member 442 to indirectly move the push member 441 and the rod 31.

The action unit 45 and the electric control valve unit 44 of the embodiment can be used with any type of adjustable devices and perform the same functions.

While we have shown and described the embodiment in accordance with the present invention, it should be clear to those skilled in the art that further embodiments may be made without departing from the scope of the present invention, as defined by the appended claims.

## Claims

1. A bicycle seat adjustable device comprising:
an outer tube (10) being a hollow tube and having a top end (11) and a bottom end (12) on two ends thereof;
an inner tube (20) being a hollow tube and inserted into the outer tube (10) via the top end (11) of the outer tube (10), the inner tube (20) having a piston seat (21) and a clamp unit (22) on two ends thereof;
a valve unit (30) extending through the piston seat (21) and located in the inner tube (20), the valve unit (30) comprising a rod (31) extending through the piston seat (21) and reaching the bottom end (12) so as to control hydraulic path in the piston seat (21), and
a height adjusting control unit (40) having a control unit (44) connected to the bottom end (12) of the outer tube (10) and an action unit (42) which is located outside of the outer tube (10), the control unit (44) having a push member (441) connected with the rod (31) so as to move the rod (31) linearly, the action unit (42) having a control transmitting member (451) which extends through the outer tube (10) and connected to the push member (441), a distal end of the control transmitting member (451) being connected to a switch (452) provided remotely from the control unit (44), the control transmitting member being adapted to transmit a control of the switch (452) to the push member (441) so as to cause the push member (441) to move the rod (31) to control the hydraulic path in the piston seat (21);
**characterized in that** the control unit is an electric control valve unit (44) and the control transmitting member is an electric wire (451), a distal end of the electric wire (451) is connected to the switch (452) so as to control the electric wire (451) and indirectly cause the push member (441) to move the rod (31) linearly and control hydraulic path in the piston seat (21) by the electric control valve unit (44).

2. The device as claimed in claim 1, wherein the outer tube (10) is integrally formed with a bicycle frame (50).

3. The device as claimed in claim 1, wherein the outer tube has a slot (13) defined axially in outer surface thereof.

4. The device as claimed in claim 1, wherein the action unit (42) has a securing unit (423) which comprises a pin (424) and two parts (425, 426), the two parts (425, 426) form a clamping space (427) so as to be connected to the bicycle frame, the switch (422) is pivotably connected to the two parts (425, 426).

5. The device as claimed in claim 1, wherein the action unit (42) has a positioning unit (43) which is mounted to the outer tube and has an annular portion (431), two base parts (432) are connected to the annular portion (431) and separated from each other at a distance, a shaft (433) is located between the two base parts (432) and the cable (431) is wrapped to the shaft (433).

6. The device as claimed in claim 1, wherein the electric control valve unit (44) has an electric control member (442) fixed in the bottom end (12) and connected to the push member (441), the electric control member (442) drives the push member (441) linearly by way of electro-magnetic force, the electric wire (451) extends through the outer tube (10) and is located in the bottom end (12) so as to be connected to the electric control member (442) which is controlled by the action unit (45) and indirectly drives the push member (441) linearly, the rod (31) is in contact with one end of the push member (441) and pushed by the push member (441).

7. The device as claimed in claim 1, wherein the action unit (45) has an action member (453) located between the switch (422) and the electric wire (452) so as to transfer the electro-magnetic in the electric wire (451) to the electric control member (442) to indirectly move the push member (441) and the rod (31).

## Patentansprüche

1. Einstellbare Fahrradsattelvorrichtung, umfassend:
ein äußeres Rohr (10), das ein hohles Rohr ist und ein oberes Ende (11) und ein unteres Ende (12) an zwei Enden davon aufweist;
ein inneres Rohr (20), das ein hohles Rohr ist und in das äußere Rohr (10) über das obere Ende (11) des äußeren Rohrs (10) gesteckt ist, wobei das innere Rohr (20) eine Kolbenaufnahme (21) und eine Klemmeinheit (22) an zwei Enden davon aufweist;
eine Ventileinheit (30), die durch die Kolbenaufnahme (21) verläuft und in dem inneren Rohr (20) angeordnet ist, wobei die Ventileinheit (30) eine Stange (31) umfasst, die durch die Kolbenaufnahme (21) verläuft und das untere Ende (12) erreicht, um den Hydraulikweg in der Kolbenaufnahme (21) zu beeinflussen, und
eine Höhenverstellungssteuereinheit (40), die eine Steuereinheit (44) aufweist, die mit dem unteren Ende (12) des äußeren Rohrs (10) verbunden ist, und eine Aktionseinheit (42), die außerhalb des äußeren Rohrs (10) angeordnet ist, wobei die Steuereinheit (44) ein Schubelement (441) aufweist, das mit der Stange (31) verbunden ist, um die Stange (31) geradlinig zu bewegen, wobei die Aktionseinheit (42) ein Steuerungsübertragungselement (451) aufweist, das durch das äußere Rohr (10) verläuft und mit dem Schubelement (441) verbunden ist, wobei ein distales Ende des Steuerungsübertragungselements (451) mit einem Schalter (452) verbunden ist, der entfernt von der Steuereinheit (44) angeordnet ist, wobei das Steuerungsübertragungselement so ausgelegt ist, dass es eine Steuerung des Schalters (452) an das Schubelement (441) überträgt, um zu bewirken, dass das Schubelement (441) die Stange (31) bewegt, um den Hydraulikweg in der Kolbenaufnahme (21) zu beeinflussen;
**dadurch gekennzeichnet, dass** die Steuereinheit eine elektrische Steuerventileinheit (44) ist und das Steuerungsübertragungselement ein Draht (451) ist, ein distales Ende des Drahts (451) mit dem Schalter (452) verbunden ist, um den Draht (451) zu steuern und indirekt zu bewirken, dass das Schubelement (441) die Stange (31) geradlinig bewegt und den Hydraulikweg in der Kolbenaufnahme (21) durch die elektrische Steuerventileinheit (44) beeinflusst.

2. Vorrichtung nach Anspruch 1, wobei das äußere Rohr (10) einteilig mit einem Fahrradrahmen (50) geformt ist.

3. Vorrichtung nach Anspruch 1, wobei das äußere Rohr einen Schlitz (13) aufweist, der axial in der Außenfläche davon definiert ist.

4. Vorrichtung nach Anspruch 1, wobei die Aktionseinheit (42) eine Befestigungseinheit (423) aufweist, die einen Stift (424) und zwei Teile (425, 426) umfasst, die zwei Teile (425, 426) einen Klemmraum (427) bilden, um mit dem Fahrradrahmen verbunden zu werden, der Schalter (422) drehgelenkig mit den beiden Teilen (425, 426) verbunden ist.

5. Vorrichtung nach Anspruch 1, wobei die Aktionseinheit (42) eine Positioniereinheit (43) aufweist, die an dem äußeren Rohr befestigt ist und einen ringförmigen Abschnitt (431) aufweist, zwei Trägerteile (432) mit dem ringförmigen Abschnitt (431) verbunden sind und mit einem Abstand voneinander getrennt sind, eine Welle (433) zwischen den beiden Trägerteilen (432) angeordnet ist und das Seil (421) an die Welle (433) gelegt ist.

6. Vorrichtung nach Anspruch 1, wobei die elektrische Steuerventileinheit (44) ein elektrisches Steuerelement (442) aufweist, das am unteren Ende (12) befestigt und mit dem Schubelement (441) verbunden ist, das elektrische Steuerelement (442) das Schubelement (441) geradlinig mittels der elektromagnetischen Kraft antreibt, der Draht (451) durch das äußere Rohr (10) verläuft und im unteren Ende (12) angeordnet ist, um mit dem elektrischen Steuerelement (442) verbunden zu werden, das von der Aktionseinheit (45) gesteuert wird und indirekt das Schubelement (441) geradlinig antreibt, wobei die Stange (31) ein Ende des Schubelements (441) berührt und von dem Schubelement (441) geschoben wird.

7. Vorrichtung nach Anspruch 1, wobei die Aktionseinheit (45) ein Aktionselement (453) aufweist, das zwischen dem Schalter (422) und dem Draht (452) angeordnet ist, um die elektromagnetische Kraft in dem Draht (451) auf das elektrische Steuerelement (442) zu übertragen, um das Schubelement (441) und die Stange (31) indirekt zu bewegen.

## Revendications

1. Dispositif réglable de selle de bicyclette comprenant :
un tube extérieur (10) qui est un tube creux et qui a une extrémité supérieure (11) et une extrémité inférieure (12) sur deux extrémités de celui-ci ;
un tube intérieur (20) qui est un tube creux et qui est introduit dans le tube extérieur (10) par l'intermédiaire de l'extrémité supérieure (11) du tube extérieur (10), le tube intérieur (20) ayant un siège de piston (21) et une unité de serrage (22) sur deux extrémités de celui-ci ;
une unité soupape (30) s'étendant à travers le siège de piston (21) et située dans le tube intérieur (20), l'unité soupape (30) comprenant une tige (31) s'étendant à travers le siège de piston (21) et atteignant l'extrémité inférieure (12) de façon à commander le trajet hydraulique dans le siège de piston (21), et
une unité de commande de réglage de hauteur (40) ayant une unité de commande (44) reliée à l'extrémité inférieure (12) du tube extérieur (10) et une unité d'actionnement (42) qui est située à l'extérieur du tube extérieur (10), l'unité de commande (44) ayant un élément de poussée (441) relié à la tige (31) de façon à déplacer la tige (31) de façon linéaire, l'unité d'actionnement (42) ayant un élément de transmission de commande (451) qui s'étend à travers le tube extérieur (10) et est relié à l'élément de poussée (441), une extrémité distale de l'élément de transmission de commande (451) qui est reliée à un commutateur (452) disposé à distance de l'unité de commande (44), l'élément de transmission de commande étant apte à transmettre une commande du commutateur (452) à l'élément de poussée (441) de façon à amener l'élément de poussée (441) à déplacer la tige (31) pour commander le trajet hydraulique dans le siège de piston (21) ;
**caractérisé par le fait que** l'unité de commande est une unité soupape à commande électrique (44) et l'élément de transmission de commande est un fil électrique (451), une extrémité distale du fil électrique (451) est reliée au commutateur (452) de façon à commander le fil électrique (451) et à amener indirectement l'élément de poussée (441) à déplacer la tige (31) linéairement et à commander le trajet hydraulique dans le siège de piston (21) par l'unité soupape à commande électrique (44).

2. Dispositif selon la revendication 1, dans lequel le tube extérieur (10) est formé d'un seul tenant avec un cadre de bicyclette (50).

3. Dispositif selon la revendication 1, dans lequel le tube extérieur a une fente (13) définie axialement dans la surface extérieure de celui-ci.

4. Dispositif selon la revendication 1, dans lequel l'unité d'actionnement (42) a une unité de fixation (423) qui comprend une broche (424) et deux parties (425, 426), les deux parties (425, 426) forment un espace de serrage (427) de façon à être reliées au cadre de bicyclette, le commutateur (422) est relié de façon pivotante aux deux parties (425, 426).

5. Dispositif selon la revendication 1, dans lequel l'unité d'actionnement (42) a une unité de positionnement (42) qui est montée sur le tube extérieur et a une partie annulaire (431), deux parties de base (432) sont reliées à la partie annulaire (431) et séparées l'une de l'autre d'une distance, un arbre (433) est situé entre les deux parties de base (432) et le câble (431) est enroulé sur l'arbre (433).

6. Dispositif selon la revendication 1, dans lequel l'unité soupape à commande électrique (44) a un élément de commande électrique (442) fixé dans l'extrémité inférieure (12) et relié à l'élément de poussée (441), l'élément de commande électrique (442) entraîne l'élément de poussée (441) linéairement au moyen d'une force électromagnétique, le fil électrique (451) s'étend à travers le tube extérieur (10) et est situé dans l'extrémité inférieure (12) de façon à être relié à l'élément de commande électrique (442) qui est commandé par l'unité d'actionnement (45) et entraîne indirectement l'élément de poussée (441) linéairement, la tige (31) est en contact avec une extrémité de l'élément de poussée (441) et poussée par l'élément de poussée (441).

7. Dispositif selon la revendication 1, dans lequel l'unité d'actionnement (45) a un élément d'actionnement (453) situé entre le commutateur (422) et le fil électrique (452) de façon à transférer la force électromagnétique dans le fil électrique (451) à l'élément de commande électrique (442) pour déplacer indirectement l'élément de poussée (441) et la tige (31).
